Europäisches Patentamt

European Patent Office

Office européen des brevets

(11) Publication number: **0 320 998**
**A1**

# EUROPEAN PATENT APPLICATION

(21) Application number: 88121235.1

(22) Date of filing: **19.12.88**

(51) Int. Cl.4: **B01J 20/04 , B01D 15/08 , G01N 30/48 , B01J 20/32**

(30) Priority: **18.12.87 JP 320839/87**

(43) Date of publication of application:
**21.06.89 Bulletin 89/25**

(84) Designated Contracting States:
**DE GB SE**

(71) Applicant: **ASAHI KOGAKU KOGYO KABUSHIKI KAISHA**
**36-9, Maeno-cho 2-Chome Itabashi-ku**
**Tokyo 174(JP)**

(72) Inventor: **Fujinuma, Satoshi**
**c/o Asahi Kogaku Kogyo K.K. 36-9, Maeno**
**2-chome**
**Itabashi-ku Tokyo(JP)**
Inventor: **Ojima, Satoshi**
**c/o Asahi Kogaku Kogyo K.K. 36-9, Maeno**
**2-chome**
**Itabashi-ku Tokyo(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) Apatite packing for liquid chromatography and process for producing the same.

(57) An apatite packing for liquid chromatography comprising particles having at least on the surface thereof chlorinated apatite, and a process for producing the same.

EP 0 320 998 A1

## APATITE PACKING FOR LIQUID CHROMATOGRAPHY AND PROCESS FOR PRODUCING THE SAME

### FIELD OF THE INVENTION

The present invention relates to a packing for liquid chromatography, and more specifically, a packing for liquid chromatography for separation and purification of proteins, enzymes, nucleic acids, etc. and a process for producing the same.

### BACKGROUND OF THE INVENTION

Generally employed packing materials for liquid chromatography include silica gel, chemically modified silica gel, synthetic high polymer gels, naturally occurring high polymer gels, carbon gel, and the like.

Hydroxyapatite represented by formula $Ca_{10}(PO_4)_6(OH)_2$ has been used as a packing for liquid chromatography for separating high molecular weight biocompounds, such as proteins, nucleic acids, sugars, glycosides, etc. because of its excellent biocompatibility.

The hydroxyapatite packing shows both cation exchanging ability and anion exchanging ability to proteins, etc., while exhibiting high ability in separation of glycosides in the normal phase mode using acetonitrile and water as a eluent. Owing to such characteristics, a single column packed with hydroxyapatite can be applied to separation of a variety of substances. Further, since the desired substance can be separated under mild elution conditions, the sample under chromatography is protected from deactivation. Furthermore, the column has a high recovery. Therefore, with developments in the biological industry, hydroxyapatite has been regarded as one of the most promising packings for chromatography. That is, hydroxyapatite is the only one of the apatite compound which has hitherto been used as a packing for liquid chromatography, as described in Journal of Liquid Chromatography, vol. 9(16), pages 3543 to 3557 (1986).

However, the hydroxyapatite packing is poor in resistance to dissolution in acidic solutions, sometimes failing to fulfil its function. That is, when an acidic mobile phase is passed through a column packed with hydroxyapatite for a long period of time, crystals of hydroxyapatite are dissolved out, and fine crystals released from the surface of packing particles and obstruct the passage of the mobile phase, eventually rendering the packing useless. Therefore, the conventional hydroxyapatite packing is not suitable for separation processes under acidic conditions. Particularly at a pH of 5.5 or less, such packing cannot be used continuously, and the range of substances which can be separated using hydroxyapatite is naturally limited.

Chlorinated apatite has been reported, as described in "Preparation and Sintering of Halogen-Bearing Apatite", Gypsum & Lime, No. 201, pages 89 to 93 (1986). However, its application to chromatography has not yet been established.

### SUMMARY OF THE INVENTION

An object of this invention is to provide a packing for liquid chromatography having improved acid resistance while maintaining the advantages of conventional hydroxyapatite packings, and which exhibits high performance for separating a wide range of substances.

Other objects and effects of the present invention will be apparent from the following description.

The above objects of the present invention have been attained by an apatite packing for chromatography comprising particles having at least on the surface thereof chlorinated apatite.

### BRIEF DESCRIPTION OF DRAWING

Fig. 1A is a chromatogram obtained in Example 1, and Fig. 1B is a chromatogram obtained in Example 2.

Fig. 2A is a chromatogram obtained in Comparative Example 1, and Fig. 2B is a chromatogram obtained in Comparative Example 2.

### DETAILED DESCRIPTION OF THE INVENTION

The chlorinated apatite used in the present invenition can be produced by a synthesis method or an ion exchanging method.

In the case where the wet method, which is one of the synthesis methods, is employed, phosphoric acid is added dropwise to a solution containing calcium and chlorine, and the thus-precipitated solid matter is granulated and pre-calcined to obtain chlorinated apatite. Calcium and chlorine used herein may be supplied from a single compound such as calcium chloride, but each may be supplied from separate compounds, respectively.

When calcium and chlorine are supplied separately, calcium hydroxide, calcium acetate, etc. can be used as a calcium sourse, and hydrochloric acid, ammonium chloride, etc. can be used as a chlorine sourse.

In the case where the dry method, which is one of the synthesis methods, is employed, the chlorinated apatite can be produced according to the method described in "The Transformation of Choroapatite into Hydroxyapatite", Indian Journal of Technology, vol.22, pages 301 to 305 (August 1984).

The wet method can also be conducted according, e.g., to Ann. Chem. (Paris), vol. 7, 808 to 832 (1952); J. Res. Nat. Bur. Stand., vol. 72A, 773 (1968); and Archs. Oral. Biol., vol. 23, 329 to 336 (1978). The dry method can also be conducted according, e.g., to Arch. Intern. Physiol. Biochim., vol. 72, 337 (1964); Chem. Abstr., vol. 60, 15418a (1964); and Studii Cercetari Chim., col. 13, 157 (1962).

In the case of the ion exchanging method, hydroxyapatite particles capable of being used as a packing for chromatography are immersed in an aqueous solution containing chloride ions so as to exchange a part of the hydroxyl groups of the hydroxyapatite for chlorine atoms, and then dried and heat-treated to obtain chlorinated apatite. Hydrochloric acid is preferably used as the aqueous solution containing chloride ions.

Examples of the embodiments of the present invention include the following:
(1) a packing comprising chlorinated apatite throughout the individual particles, (2) a packing comprising apatite particles of which the surface is chlorinated apatite, and (3) a packing comprising inert carrier particles coated with chlorinated apatite.

In the above embodiment (1), the whole of the individual particles is formed of the chlorinated apatite and preferably has a porosity of from 0 to 50% and a specific surface area of from about 0.01 to 20 $m^2/g$. The porosity can be controlled by changing the calcining temperature of the density of the particle forming material.

In the above embodiments (2) and (3), the thickness of the chlorinated apatite surface layer is preferably about 1μm or more. The porosity and the specific surface area of the packing are preferably from 0 to 50% and from about 0.01 to 20 $m^2/g$, respectively.

The above embodiment (1) in which the whole of the individual particles is formed of chlorinated apatite can be prepared by heat-treating an agglomerate of chlorinated apatite particles prepared by the above methods at a suitable temperature, as described.

The above embodiment (2) in which the surface of apatite particles is chlorinated apatite can be prepared by immersing and stirring an agglomerate of apatite particles in an aqueous solution containing chloride ions, and then drying and heat-treating at a suitable temperature, as described.

The immersing and stirring is generally carried out under acidic conditions at a temperature of from 5 to 90°C for from 0.5 to 10 hours.

The above embodiment (3) in which inert carrier particles such as alumina are coated with chlorinated apatite can be prepared by sputtering or the like methods, as described.

The packing particles for liquid chromatography of the present invention are not particularly limited in size, shape, porosity, etc. However, performances such as separating ability can be assured by following a general particle design for packings for liquid chromatography. For example, the packing preferably has an average particle diameter of from about 1 to 100 μm, more particularly from about 10 to 100 μm for industrial use and from about 1 to 10 μm for use in analyses. If the average particle size is less than about 1 μm, the pressure drop on passing a liquid sample through a column packed with the packing becomes too large. If it exceeds about 100 μm, the surface area of the packing per unit volume is too small to assure separating ability. The packing preferably has a shape near to a spherical form in order to obtain stable separation characteristics while preventing cracks or cutouts, although particles having a macadamized form may be used. The porosity is preferably high in view of the load of the samples, but non-porous packing may be used, for example, for analytical purposes. The specific surface area is preferably from about 0.01 to 20 $m^2/g$, although it may be varied depending on the form of the packing particles.

The packing of the present invention can be used for a method for liquid chromatography by sequentially (a) packing a column with the packing of the present invention, (b) contacting the packing with a sample comprising at least one solute, and (c) contacting the packing with a liquid mobile phase to separate the solute by elution.

Upon carrying out the method for liquid chromatography, the preferred eluents are as follows: In an ion exchanging mode, (1) a sodium phosphate buffer (pH 5 to 9), (2) a potassium phosphate buffer, (3) a mixture of a sodium chloride solution and various buffers (e.g., tris buffer, pipes buffer, etc.) and (4) a mixture of a potassium chloride solution and varous buffers (e.g., tris buffer, pipes buffer, etc.). In the cases of (1) and (2), a gradient elution at a concentration of from 10-100 mM to 1 M is preferred. In a normal mode, an isocratactic elution with the acetonitrile/water ratio of from about 7/3 to 9/1, and a gradient elution while increasing the water concentration are preferred.

The packing for liquid chromatography according to the present invention can be suitably applied to separation of solutes such as proteins (e.g., monoclonal antibody and fibronectin), enzymes (e.g., ligase and protease), nucleic acids, (e.g., nucleotide, oligonucleotide, DNA and RNA), glycosides (ginsenoside, steviside, rebaudioside and saponin), and so on and exhibits stable separation performance even in an acidic solution, e.g., phosphoric acid, hydrochloric acid, etc. having pH of 3 or more.

The present invention is now illustrated in greater detail with reference to the following Example and Comparative Example, but the present invention is not to be construed as being limited thereto.

Unless otherwise indicated, all parts, percents, ratios and the like are by weight.

EXAMPLE 1

8 g of spherical apatite particles were added to an aqueous solution of hydrochloric acid having a pH of 4.5. The mixture was reacted for 1 hour while stirring, and after filtering and drying by evaporation, the particles were heat-treated to obtain a powderous packing. The formation of chlorinated apatite by the above procedures was confirmed by X-ray diffractiometry, infrared absorption, etc.

The thus-obtained packing was filled in a stainless steel column having a diameter of 7.5 mm and a height of 100 mm. A sample solution containing a phosphoric acid buffer solution (pH = 6.8) having dissolved therein 10 $\mu$g/$\mu\ell$ of bovine serum albumin, 1.25 $\mu$g/$\mu\ell$ of lysozyme, and 5 $\mu$g/$\mu\ell$ of cytochrome C was passed through the column.

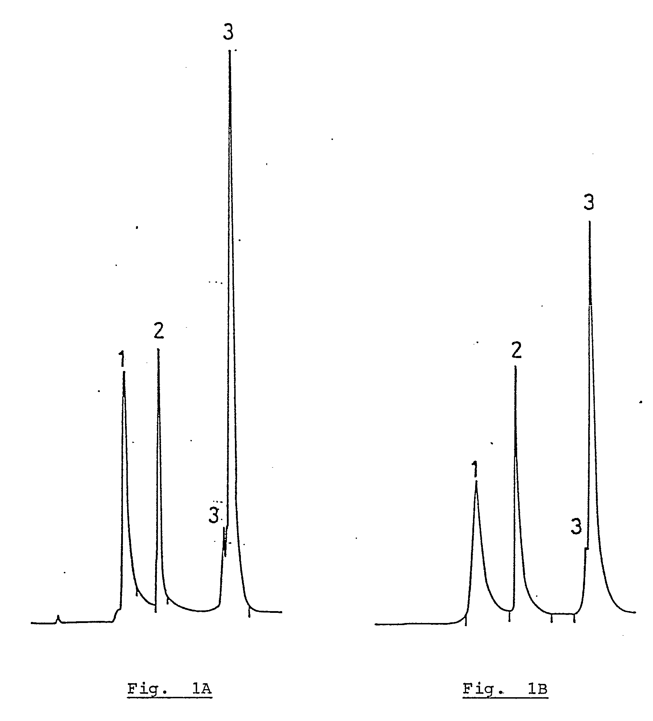

Elution was made by a linear gradient method at a flow rate of 1.0 m$\ell$/min for 30 minutes by using a sodium phosphate buffer (pH = 6.8) having a concentration of from 0.01 to 0.4M as an eluent so as to obtain the chromatogram shown in Fig. 1A.

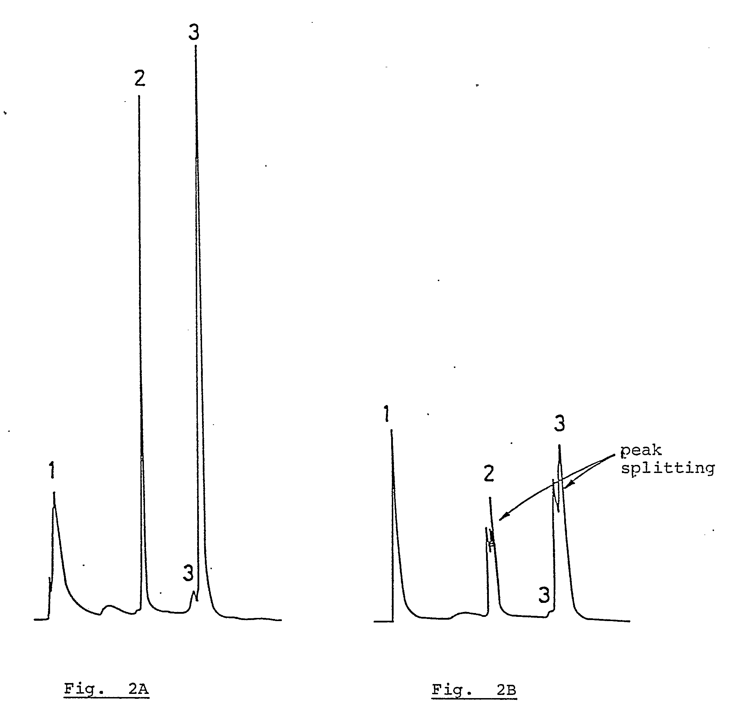

In Figs. 1A, 1B, 2A and 2B, peak 1 is the peak of bovine serum albumin, peak 2 is the peak of lysozyme, and peak 3 is the peak of cytochrome C.

EXAMPLE 2

After passing through a column filled with the packing prepared in Example 1 a sodium phosphate buffer having a pH of 5.0 and a concentration of 0.4M at a flow rate of 1.0 m$\ell$/min for 10 hours, the sample solution used in Example 1 was separated in the same manner as in Example 1 so as to obtain a chromatogram shown in Fig. 1B.

As is clear from Figs. 1A and 1B, when the chlorinated apatite packing according to the present invention was used, no peak splitting occured even after a 0.4M sodium phosphate buffer having a pH of 5.0 was passed for 10 hours. Thus, stable high separation performance was attained over a long period.

COMPARATIVE EXAMPLE 1

The same procedures as in Example 1 were repeated except that a conventional hydroxyapatite packing was used instead of the packing of the present invention used in Example 1 so as to obtain the chromatogram shown in Fig. 2A.

COMPARATIVE EXAMPLE 2

After passing through the column a 0.4M sodium phosphate buffer having a pH of 5.0 for 10 hours, the same procedures as in Comparative Example 1 were repeated so as to obtain a chromatogram shown in Fig. 2B.

As is clear from Figs. 2A and 2B, when the conventional hydroxyapatite packing was used, peak splitting caused by the deterioration of the column occured after a 0.4M sodium phosphate buffer having a pH of 5.0 was passed for 10 hours.

As described above, the packing for liquid chromatography according to the present invention has excellent acid resistance while maintaining high separation performance of conventional hydroxyapatite packings, and does not deteriorate even after passing an acidic solution therethrough over a long period. Therefore, the packing of the present invention can be used stably for separating various compounds, particularly proteins, enzymes, nucleic acids, sugar, glycosides, etc., even in an acidic region for a long period of time.

While the invention has been described in detail and with reference to specific embodiments thereof, it will be apparent to one skilled in the art that various changes and modifications can be made therein without departing from the spirit and scope thereof.

## Claims

1. An apatite packing for liquid chromatography comprising particles having at least on the surface thereof chlorinated apatite.

2. An apatite packing for liquid chromatography as claimed in claim 1 wherein the average diameter of said packing particles are from 1 to 100 μm.

3. An apatite packing for liquid chromatography as claimed in claim 1, wherein the whole of the particles of said packing is formed of said chlorinated apatite.

4. An apatite packing for liquid chromatography as claimed in claim 1, wherein said packing comprises apatite particles having on the surface thereof said chlorinated apatite.

5. A method for producing an apatite packing for liquid chromatography comprising the step of: immersing and stirring an agglomerate of apatite particles in an aqueous solution containing chloride ions so as to convert said apatite particles into chlorinated apatite.

6. A method for producing an apatite packing for liquid chromatography as claimed in claim 5, wherein said immersing and stirring step were carried out at a temperature of from 0.5 to 90°C for from 0.5 to 10 hours.

7. A method for liquid chromatography comprising the steps of:

(a) packing a column with an apatite packing comprising chlorinated apatite;

(b) contacting said packing with a sample comprising at least one solute;

(c) contacting said packing with a liquid mobile phase to separate said solute by elution.

8. A method for liquid chromatography as claimed in claim 7, wherein said solute is selected from a protein, an enzyme, a nucleic acid and a glycoside.

9. A method for liquid chromatography as claimed in claim 7, wherein said mehtod for liquid chromatography is conducted at a pH of 3 or more.

Fig. 1A

Fig. 1B

Fig. 2A

Fig. 2B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 274 608 (KOKEN CO., LTD)<br>* Column 1, lines 13-55; column 5, line 35 - column 6, line 40; claims 1-5 * | 1,2,7,8 | B 01 J 20/04<br>B 01 D 15/08<br>G 01 N 30/48<br>B 01 J 20/32 |
| P,X | DE-A-3 722 102 (ASAHI KOGAKU KOGYO K.K.)<br>* Column 1, line 29 - column 2, line 48; column 3, lines 3-12; column 3, line 55 - column 4, line 15; claims 1-3 * | 1,2,7-9 | |
| P,A | DE-A-3 722 103 (ASAHI KOGAKU KOGYO K.K.)<br>* Column 2, lines 24-57; column 3, lines 60-64 * | 1,3 | |
| A | EP-A-0 205 622 (KANTO KAGAKU K.K.)<br>* Page 1, paragraph 1; pages 8,9; page 15, last line - page 16, line 10; page 21, lines 5-15; page 25, example 4; page 26, example 6 * | 1-3,5,6 | |
| A | CHEMICAL ABSTRACTS, vol. 81, no. 12, 23rd September 1974, abstract no. 71943t, page 599, Columbus, Ohio, US; E.J. DUFF: "Synthesis of fluoride containing apatites from hydroxyapatite under aqueous conditions employing a cyclic pH variation technique", & CHEM. IND. (London) 1974, (8), 349-50<br>* Abstract * | 5,6 | TECHNICAL FIELDS SEARCHED (Int. Cl.4)<br><br>B 01 J<br>B 01 D<br>G 01 N<br>C 01 B |

The present search report has been drawn up for all claims

| Place of search | Date of completion of the search | Examiner |
|---|---|---|
| THE HAGUE | 23-03-1989 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P0401)